# EUROPEAN PATENT SPECIFICATION

(11) **EP 3 414 084 B1**
(45) Date of publication and mention of the grant of the patent: **30.03.2022**
(21) Application number: 17749925.8
(22) Date of filing: 10.02.2017
(51) Int. Cl.: B29D 30/06

(54) **VULCANISING DEVICE OF A VEHICLE TYRE**
VULKANISIERVORRICHTUNG EINES FAHRZEUGREIFENS
DISPOSITIF DE VULCANISATION D'UN PNEUMATIQUE DE VÉHICULE

(30) Priority: 12.02.2016 FI 20165104
(43) Date of publication of application: 19.12.2018
(73) Proprietor: WD Racing Oy, 37200 Siuro (FI)
(72) Inventor: PENKKIMÄKI, Pekka, FI-37200 Siuro (FI)
(74) Representative: Papula Oy
(86) International application number: PCT/FI2017/050076
(87) International publication number: WO 2017/137666

(56) References cited:
- EP-A1- 2 072 235
- EP-A1- 2 241 650
- WO-A1-93/24309
- WO-A1-93/24309
- US-A1- 2009 162 460

## Description

The invention relates to a vulcanising device of a vehicle tyre according to the preamble of claim 1.

During the manufacturing process of vehicle tyres, a tyre blank is formed from different components of a tyre, which tyre blank is vulcanised under pressure and at an increased temperature in a vulcanising device. The vulcanising device is provided with a curing bag, into which steam is led, which steam presses the tyre blank against the surface pattern and the side texts in a vulcanizing mould of the vulcanising device. In this way the tyre gets its final form.

A vulcanising mould comprises profile segments, which comprise the tread pattern, which profile segments are against the tyre blank during vulcanisation. The profile segments are arranged on segment shoes around which there is a conical closure ring which is against back surfaces of the segment shoes. By moving the closure ring in the back surfaces of the segment shoes in the axial direction of the tyre blank, the segment shoes will move towards the tyre tread of the tyre blank in the radial direction of the tyre blank or away from the tyre tread. **Documents** WO-93/24309-A1**,** EP-2072235-A1 **and** EP-2241650-A1 **disclose arrangements in vulcanizing moulds.**

The drawback with a vulcanising device is the wearing of metal surfaces moving against each other, when the vulcanising device is being opened and closed. Particularly, wearing occurs in the back surfaces of the segment shoes against which the closure ring is moved, and in the inner surface of the closure ring. Moreover, wearing is significant in the surface of the lower plate of the vulcanising device as well as in the lower surfaces of the segment shoes, which lower surfaces are against the lower plate. Particularly, wearing is caused by so-called microwelding, wherein two metal surfaces are in slide contact with each other under high surface pressure. Then the metal surfaces contacting each other are welded to each other for a moment, which causes wearing of the surfaces. Wearing may change the position of the parts of the vulcanising device and thus cause so-called step off defects, conicity and side thrust variation in the vulcanised tyre. As a result, the parts that are exposed to wearing have to be changed every now and then, which increases operating costs of a vulcanising device and causes breaks in the vulcanising process.

The object of the present invention is to provide an improved solution by means of which the drawbacks described above can be reduced.

The object according to the invention is achieved by a vulcanising device according to claim 1.

The vulcanising device of a vehicle tyre according to the invention comprises a lower plate, on which segment shoes are fitted, on which profile shoes profile segments are arrangeable to form a tread pattern on the tyre blank to be vulcanised, and a closure ring for moving segment shoes in the radial direction of the tyre to be vulcanised. The closure ring is fitted around the segment shoes against back surfaces of the segment shoes. The closure ring comprises wear plates, which are coated with a ceramic coating layer, which wear plates are placed on the inner surface of the closure ring so that the ceramic coating layers are fitted against the back surfaces of the segment shoes and/or the lower plate comprises wear plates, which are coated with a ceramic coating layer, which wear plates are arranged on the surface of the lower plate so that the ceramic coating layers are fitted against lower surfaces of the segment shoes.

Significant advantages are achieved by means of the invention. A non-metallic ceramic coating of wear plates prevents a contact between two metal surfaces, wherein no microwelding occurs between the surfaces during the use of the vulcanising device, due to which wearing of the surfaces is low, wherein the position of the parts of the vulcanising device remains more likely as desired. As a result, the quality of a vulcanised tyre can be improved, i.e. the conicity of a tyre and side thrust variations can be reduced, which may cause an abandonment of a tyre in the production process, or cause problems while driving or while balancing a tyre. A ceramic coating layer withstands well heat, mechanical stress and wearing, due to which their operational life is long. Furthermore, the friction between a ceramical coating layer and a segment shoe is small. The solution according to the invention can be used also in the existing vulcanising devices.

In the following, the invention will be described in more detail by means of examples with reference to the attached drawings, wherein
fig. 1 shows a cross-sectional view of a vulcanising device according to an embodiment of the invention,

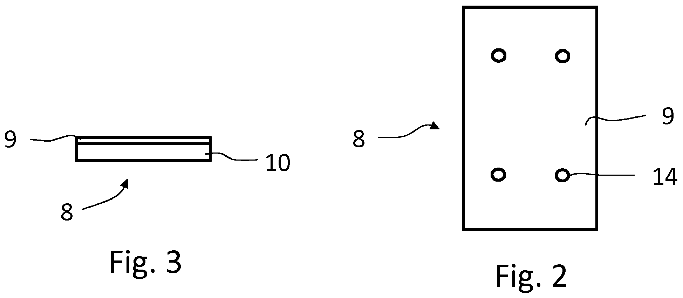

fig. 2 shows a closure ring of the vulcanising device of fig. 1 and the wear plate of the lower plate, and
fig. 3 shows a cross-sectional view of the wear plate of fig. 2.

A vulcanising device 1 of a vehicle tyre shown in figures comprises an upper side plate 3 and a lower side plate 4, between which a tyre blank to be vulcanised (not shown) is fittable. The side plates 3, 4 are fittable against opposite sides of the tyre blank. There is a pattern in the side plates 3, 4 for a pattern, e.g. for a text, to be formed into the sides of the tyre. The side plates 3, 4 are of circular shape.

Moreover, the vulcanising device 1 comprises profile segments 5 in order to form a tread pattern onto the tyre blank. The profile segments 5 are arranged around the lower side plate 4 in a circular form. The tyre blank is fittable inside the circle formed by the profile segments 5. A vulcanising device 1 comprises typically 7-10 profile segments 5. The profile segments 5 are provided with a pattern in order to form a tread pattern onto the tyre. During vulcanisation the profile segments 5 are against outer periphery of the tyre blank, i.e. against the tyre tread. The side plates 3, 4 and the profile segments 5 form a vulcanisation mould of the vulcanisation device 1. The upper side plate 3, the lower side plate 4 and the profile segments 5 define a space 2, onto which the tyre blank to be vulcanised is fittable.

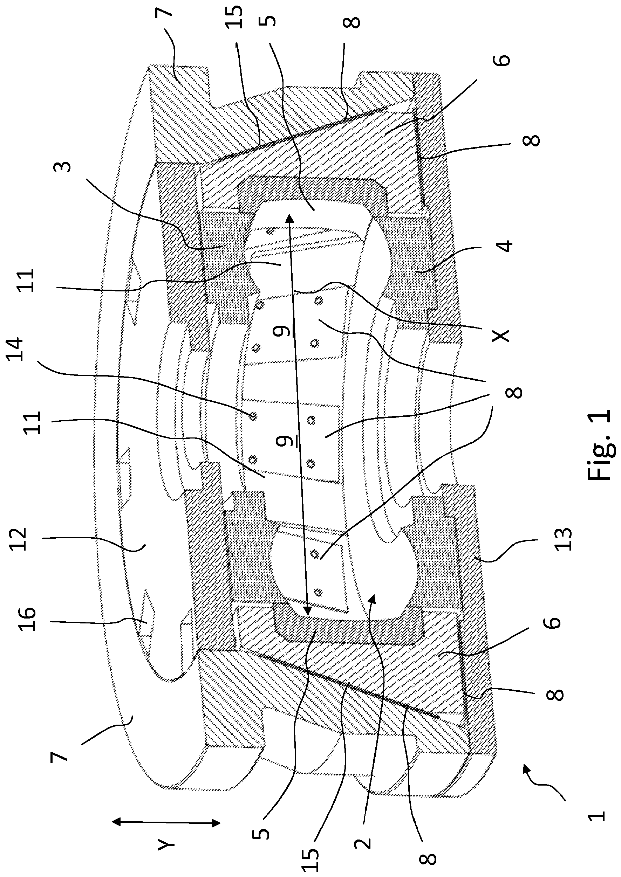

The profile segments 5 are mounted on segment shoes 6. Each profile segment 5 has been arranged into a separate segment shoe 6. The profile segments 5 are detachable from the segment shoes 6 for cleaning or for replacement, for example. The back surfaces of the segment shoes 6 are conical. The segments shoes 6 are arranged into a circle around the lower side plate 4. A closure ring 7 is fitted around the segment shoes 6 against the back surfaces 15 of the segment shoes 6 in order to move the segment shoes 6 in the radial direction X of the closure ring 7, i.e. of the tyre blank to be vulcanised. In figure 1, for clarity's sake, only two segments shoes 6 and profile segments 5 are shown in the intersections. Between these, i.e. in the back part of the vulcanising device 1, segment shoes 6 and segments profiles 5 are not shown so that the structure of the inner surface of the closure ring 7 can be shown better.

Furthermore, the vulcanising device 1 comprises an upper plate 12 and a lower plate 13, between which the side plates 2, 3 and the segment shoes 6 are fitted. The upper side plate 3 is attached to the upper plate 12. The lower side plate 4 is attached to the lower plate 13. The segment shoes 6 are movably affixed onto the upper plate 12 so that they can be moved in the radial direction X. There are attachment points 16 in the upper plate 12 for the fixing of the segment shoes 6. The segment shoes 6 are fitted on the upper surface of the lower plate 13. The outer diameter of the circle formed by the segment shoes 6 widens towards the lower plate 13. The closure ring 7, the segment shoes 6, the lower plate 13 and the upper plate 12 are fabricated from metal, e.g. from steel suitable for the purpose.

The radial movement X of the segment shoes 6 is caused by moving the closure ring 7 along the back surfaces 15 of the segment shoes 6. Then the closure ring 7 is moved in the axial direction Y of the closure ring 7. The axial direction Y is perpendicular to the radial direction X. For example, when the closure ring 7 is moved in the axial direction Y towards the lower plate 13, the segment shoes 6 are moving in the radial direction X inwards. The opposite movement of the segment shoes 6 is achieved by moving the closure ring 7 in the axial direction Y to the opposite direction, i.e. upwards. The inner surface of the closure ring 7 is conical. The inner diameter of the closure ring 7 widens towards the lower part of the closure ring 7. The closure ring 7 is provided with a steam space (not shown), into which steam is directed during vulcanisation, which steam heats the closure ring 7. The heat conducts from the closure ring 7 to the segment shoes 6 and further to the profile segments 5.

The closure ring 7 is movably affixed to the segment shoes 6 so that the closure ring 7 can be moved in the axial direction Y in relation to the segment shoes 6. For the fixing, the inner surface of the closure ring 7 is provided with projections 11, e.g. projections having a T-shaped cross-sectional shape, some of which projections are affixed onto the inner surface of the closure ring 7 with screws, for example. The foots of the T-shaped projections 11 are affixed from their ends onto the inner surface of the closure ring 7. The segment shoes 6 comprise elongated grooves, the shape of which is that of the projections, which grooves open towards the outer surfaces of the segment shoes 6. The projections 11 of the closure ring 7 are fitted into the grooves of the segment shoes 6. For each segment shoe 6 there is one projection 11 and one groove. The grooves are vertical, and the projections can move in the grooves in the axial direction Y. When the closure ring 7 is lifted, the projections 11 in the grooves draw the segment shoes 6 outwards in the radial direction X. When the closure ring 7 is moved downwards, the closure ring 7 presses the segment shoes 6 inwards in the radial direction X.

The closure ring 7 comprises wear plates 8, which are coated with a ceramic coating layer 9. The wear plates 8 are arranged on the inner surface of the closure ring 7, i.e. on the surface towards the back surfaces 15 of the segment shoes 6 so that the ceramic coating layers 9 are against the back surfaces 15 of the segment shoes 6. The wear plates 8 can be circular, square, triangle, rectangle, parallelogram, or diamond in shape. The ceramic coating layers 9 slide along the back surfaces 15 of the segment shoes 6, when the closure ring 7 is moved in the axial direction Y. The wear plates 8 are affixed onto the inner surface of the closure ring 7 by screws, for example. For this purpose, the wear plates 8 are provided with screw holes 14. At least one wear plate 8, typically two wear plates 8 for each segment shoe 6, is placed on the inner surface of the closure ring 7. The ceramic coating layers 9 of the wear plates 8 prevent the contact between the metal surfaces of the closure ring 7 and of the segment shoes 6. Moreover, the wear plates 8 can be placed on the back surfaces of the segment shoes 6 so that the ceramic coating layers 9 of the wear plates 8 of the closure ring 7 and the ceramic coating layers 9 of the wear plates 8 of the back surfaces of the segment shoes 6 are against each other.

The wear plate 8 comprises a plate part 10, e.g. a metal plate, on surface of which a ceramic coating layer 9 has been formed. The thickness of the plate 10 is typically 2.5-3.5 mm. The thickness of the ceramic coating layer is 0.001-0.5 mm, typically 5-40 micrometer (µm). Thus, the thickness of the wear plate 8 is 4 mm at most. The ceramic coating layer 9 can be aluminium oxide (Al₂O₃), chromium nitride (CrN), aluminium chromium nitride (AlCrN) or silicon-based ceramics as silicon carbide (SiC) or silicon nitride (Si₃N₄), for example. The ceramic coating layer 9 can be formed by a method suitable for the purpose, such as PVD (Physical Vapor Deposition) method. The coating layer 9 can comprise grooves, projections or cuttings, such as pores, opening to the surface of the coating layer 9. According to the invention, there are cuttings in the coating layer 9 that are filled with teflon, i.e. with polytetrafluoroethylene (PTFE), wherein during the use of the vulcanising device 1 polytetrafluoroethylene in cuttings moves onto the surface of the coating layer 9 and onto the counter surface of it, thus reducing the sliding friction between the surfaces. The wear plates 8 are bent to the same form as the surface on which they are affixed.

The wear plates 8 can be placed also on the upper surface of the lower plate 13 so that the segment shoes 6 are against the ceramic coating layers 9 of the wear plates 8. The wear plates 8 of the lower plate 13 can be of the same type as the wear plates 8 on the inside surface of the closure ring 7. The segment shoes 6 are arranged to slide along the ceramic coating layers 9 of the wear plates 8 in the lower plate 13 in the radial direction X. Thus, the ceramic coating layers 9 of the wear plates prevent the contact of the metal surfaces of the segments shoes 6 and of the lower plate 13. Moreover, the wear plates 8 can be placed on the lower surfaces of the segment shoes 6 so that the ceramic coating layers of the lower plate 13 and of the segment shoes 6 are against each other.

The wear plates 8 provided with the ceramic coating layer 9 described above can also be placed on other surfaces of the vulcanising device 1 which are in slide contact, e.g. on the surfaces of the projection 11 and/or on their counter surfaces in the segment shoes 6, on the upper surfaces of the segment shoes 6 and/or on the lower surface of the upper plate 12, if these are in slide contact with each other. Also the attachment points 16 on segments shoes 6 and on upper plate 12 can be provided with wear plates 8 provided with a ceramic coating layer 9, which wear plates 8 prevent the contact between the two metal surfaces, when the segment shoes 6 are moved in the radial direction X.

The surfaces comprising wear plates 8 can be provided with recesses into which the wear plates 8 are fitted. The depth of the recesses is selected so that the coating layer 9 protrudes from the recess. Thus, the wear plates 8 do not require a large clearance, wherein they can be used in the existing vulcanisation devices.

An actuator can be connected to the vulcanising device 1, with which the upper part of the vulcanising device, i.e. the upper plate 12, the upper side plate 3, the closure ring 7, the segment shoes 6, the profile segments 5 and the closure ring 7 are moved in the axial direction Y. An actuator can also be connected to the closure ring 7, with which actuator the closure ring 7 is moved in the axial direction Y in relation to the other upper part.

The vulcanising device 1 is used as follows. The upper part of the vulcanising device 1 is lifted until it is at such a distance from the lower part of the vulcanising device, i.e. from the lower part 13 and from the lower side plate 4, that the vulcanised tyre on the lower side plate 4 can be removed. Thereafter, a new tyre blank is placed on the lower side plate 4. In the middle of the tyre blank there is a curing bag, into which steam is led, whereby the tyre blank moves to its right place on the lower side plate 4. The upper part of the vulcanising device 1 is lowered down so that the segment shoes 6 are against the coating layers 9 of the wear plates 8 on the lower plate 13. Thereafter, the closure ring 7 is moved in the axial direction Y towards the lower plate 13. The wear plates 8 of the closure ring 7 glide against the back surfaces of the segment shoes 6 and push the segment shoes 6 and the profile segments 5 in the radial direction X towards the tyre tread of the tyre blank. When the profile segments 5 are against the tyre tread, the movement of the closure ring 7 is stopped. The steam pressure of the curing bag is raised, wherein the tyre tread of the tyre blank presses against the profile segments 5, and the sides of the tyre blank against the upper side plate 3 and the lower side plate 4. Thereafter, the tyre blank is vulcanised at a temperature over 150 °C for 12-25 minutes depending on the size of the tyre. After the vulcanisation the steam pressure will be lowered, the closure ring 7 will be moved in the axial direction Y upwards, wherein the closure ring 7 draws the segment shoes 6 in the radial direction X away from the vulcanised tyre. When the segment shoes 6 are moved sufficiently, the upper part of the vulcanising device 1 is lifted upwards, after which the vulcanised tyre can be removed from top of the lower part of the vulcanising device 1.

It is obvious to the person skilled in the art that the invention is not solely limited to the embodiments presented above, but it can be varied within the scope of the claims presented below.

## Claims

1. A vulcanising device (1) of a vehicle tyre comprising:
- lower plate (13), onto which segments shoes (6) are fitted, onto which segment shoes (6) profile segments (5) are arrangeable in order to form a tread pattern on the tyre blank to be vulcanised, and
- closure ring (7) for moving segment shoes (6) in the radial direction (X) of the closure ring (7), which closure ring (7) is fitted around the segment shoes (6) against the back surfaces (15) of the segment shoes (6), **characterized in that**
- the closure ring (7) comprises wear plates (8), which are coated with a ceramic coating layer (9), which wear plates (8) are arranged on the inner surface of the closure ring (7) so that the ceramic coating layers (9) are fitted against the back surfaces (15) of the segment shoes (6), and/or
- lower plate (13) comprises wear plates (8), which are coated with a ceramic coating layer (9), which wear plates (8) are arranged on the surface of the lower plate (13) so that the ceramic coating layers (9) are fitted against the lower surfaces of the segment shoes (6),
- **and wherein the wear plates (8) further comprise cuttings opening into the surface of the coating layer (9), which cuttings are filled with polytetrafluoroethylene (PTFE).**

2. A vulcanising device (1) according to claim 1, **characterized in that** the thickness of the ceramic coating layer (9) of the wear plates (8) is 0.001-0.5 mm, typically 5-40 µm.

3. A vulcanising device (1) according to any of the preceding claims, **characterized in that** the ceramic coating layer (9) of the wear plates (8) is aluminium oxide (Al₂O₃), chromium nitride (CrN), aluminium chromium nitride (AlCrN) or silicon-based ceramics, such as silicon carbide (SiC) or silicon nitride (Si₃N₄).

4. A vulcanising device (1) according to any of the preceding claims, **characterized in that** at least one wear plate (8), typically two wear plates (8) for each segment shoe (6), are affixed onto the inside surface of the closure ring (7).

5. A vulcanising device (1) according to any of the preceding claims, **characterized in that** the closure ring (7) is movable in the axial direction (Y) of the closure ring (7) for moving the segment shoes (6) in the radial direction (X).

6. A vulcanising device (1) according to any of the preceding claims, **characterized in that** the segment shoes (6) comprise wear plates (8), which are coated with a ceramic coating layer (9), which wear plates (8) are arranged on the back surfaces (15) of the segment shoes (6) so that the ceramic coating layers (9) of the wear plates of the segment shoes (6) and the ceramic coating layers (9) of the wear plates (8) of the closure ring (7) are against each other.

7. A vulcanising device (1) according to any of the preceding claims, **characterized in that** at least one wear plate (8), typically two wear plates (8) for each segment shoe (6), is arranged on the upper surface of the lower plate (13).

8. A vulcanising device (1) according to any of the preceding claims, **characterized in that** the wear plates (8) coated with a ceramic coating layer (9) are arranged on the lower surfaces of the segment shoes (6) so that the ceramic coating layers (9) of the wear plates of the lower plate (13) and the ceramic coating layers (9) of the wear plates (8) on the lower surfaces of the segment shoes (6) are against each other.

9. A vulcanising device (1) according to any of the preceding claims, **characterized in that** the vulcanising device (1) comprises an upper side plate (3) and the lower side plate (4), which are fittable against the opposite sides of the tyre blank to be vulcanised and around of which the segments shoes (6) are fitted.

## Patentansprüche

1. Vulkanisiereinrichtung (1) für einen Fahrzeugreifen, umfassend:
- eine untere Platte (13), auf der Segmentschuhe (6) angebracht sind, wobei auf den Segmentschuhen (6) Profilsegmente (5) angeordnet werden können, um ein Laufflächenmuster auf dem zu vulkanisierenden Reifenrohling zu bilden, und
- einen Verschlussring (7) zum Bewegen von Segmentschuhen (6) in der radialen Richtung (X) des Verschlussrings (7), wobei der Verschlussring (7) um die Segmentschuhe (6) herum an den hinteren Oberflächen (15) der Segmentschuhe (6) angebracht ist,
**dadurch gekennzeichnet, dass**
- der Verschlussring (7) Verschleißplatten (8) umfasst, die mit einer keramischen Überzugsschicht (9) überzogen sind, wobei die Verschleißplatten (8) auf der inneren Oberfläche des Verschlussrings (7) angeordnet sind, so dass die keramischen Überzugsschichten (9) an den hinteren Oberflächen (15) der Segmentschuhe (6) angebracht sind, und/oder
- die untere Platte (13) Verschleißplatten (8) umfasst, die mit einer keramischen Überzugsschicht (9) überzogen sind, wobei die Verschleißplatten (8) auf der Oberfläche der unteren Platte (13) angeordnet sind, so dass die keramischen Überzugsschichten (9) an den unteren Oberflächen der Segmentschuhe (6) angebracht sind,
- und wobei die Verschleißplatten (8) ferner Ausschnitte aufweisen, die sich in die Oberfläche der Überzugsschicht (9) hinein öffnen, wobei die Ausschnitte mit Polytetrafluorethylen (PTFE) gefüllt sind.

2. Vulkanisiereinrichtung (1) nach Anspruch 1, **dadurch gekennzeichnet, dass** die Stärke der keramischen Überzugsschicht (9) der Verschleißplatten (8) 0,001-0,5 mm, typischerweise 5-40 µm, beträgt.

3. Vulkanisiereinrichtung (1) nach einem der vorangehenden Ansprüche, **dadurch gekennzeichnet, dass** die keramische Überzugsschicht (9) der Verschleißplatten (8) aus Aluminiumoxid (Al₂O₃), Chromnitrid (CrN), Aluminiumchromnitrid (AICrN) oder Keramik auf Siliziumbasis, wie Siliziumkarbid (SiC) oder Siliziumnitrid (Si₃N₄), gebildet ist.

4. Vulkanisiereinrichtung (1) nach einem der vorangehenden Ansprüche, **dadurch gekennzeichnet, dass** zumindest eine Verschleißplatte (8), typischerweise zwei Verschleißplatten (8) für jeden Segmentschuh (6), auf der Innenseitenoberfläche des Verschlussrings (7) befestigt ist/sind.

5. Vulkanisiereinrichtung (1) nach einem der vorangehenden Ansprüche, **dadurch gekennzeichnet, dass** der Verschlussring (7) in der axialen Richtung (Y) des Verschlussrings (7) beweglich ist, um die Segmentschuhe (6) in der radialen Richtung (X) zu bewegen.

6. Vulkanisiereinrichtung (1) nach einem der vorangehenden Ansprüche, **dadurch gekennzeichnet, dass** die Segmentschuhe (6) Verschleißplatten (8) umfassen, die mit einer keramischen Überzugsschicht (9) überzogen sind, wobei die Verschleißplatten (8) auf den hinteren Oberflächen (15) der Segmentschuhe (6) angeordnet sind, so dass die keramischen Überzugsschichten (9) der Verschleißplatten der Segmentschuhe (6) und die keramischen Überzugsschichten (9) der Verschleißplatten (8) des Verschlussrings (7) aneinander anliegen.

7. Vulkanisiereinrichtung (1) nach einem der vorangehenden Ansprüche, **dadurch gekennzeichnet, dass** zumindest eine Verschleißplatte (8), typischerweise zwei Verschleißplatten (8) für jeden Segmentschuh (6), auf der oberen Oberfläche der unteren Platte (13) angeordnet ist/sind.

8. Vulkanisiereinrichtung (1) nach einem der vorangehenden Ansprüche, **dadurch gekennzeichnet, dass** die mit einer keramischen Überzugsschicht (9) überzogenen Verschleißplatten (8) auf den unteren Oberflächen der Segmentschuhe (6) angeordnet sind, so dass die keramischen Überzugsschichten (9) der Verschleißplatten der unteren Platte (13) und die keramischen Überzugsschichten (9) der Verschleißplatten (8) auf den unteren Oberflächen der Segmentschuhe (6) aneinander liegen.

9. Vulkanisiereinrichtung (1) nach einem der vorangehenden Ansprüche, **dadurch gekennzeichnet, dass** die Vulkanisiereinrichtung (1) eine obere Oberseitenplatte (3) und eine Unterseitenplatte (4) umfasst, die an den gegenüberliegenden Seiten des zu vulkanisierenden Reifenrohlings angebracht werden können und um welche herum die Segmentschuhe (6) angebracht sind.

## Revendications

1. Dispositif de vulcanisation (1) d'un pneumatique de véhicule, comprenant :
- une plaque inférieure (13), sur laquelle des châssis de segment (6) sont montés, sur lesquels châssis de segment (6) des segments profilés (5) sont aptes à être disposés afin de former une sculpture de bande de roulement sur l'ébauche du pneumatique à vulcaniser, et
- une bague de fermeture (7) pour déplacer les châssis de segment (6) dans la direction radiale (X) de la bague de fermeture (7), ladite bague de fermeture (7) est montée autour des châssis de segment (6) contre les surfaces arrière (15) des châssis de segment (6), **caractérisé en ce que**
- la bague de fermeture (7) comprend des plaques d'usure (8) qui sont revêtues d'une couche de revêtement céramique (9), lesdites plaques d'usure (8) sont disposées sur la surface interne de la bague de fermeture (7), de sorte que les couches de revêtement céramique (9) sont montées contre les surfaces arrière (15) des châssis de segment (6), et/ou
- la plaque inférieure (13) comprend des plaques d'usure (8) qui sont revêtues d'une couche de revêtement céramique (9), lesdites plaques d'usure (8) sont disposées sur la surface de la plaque inférieure (13) de sorte que les couches de revêtement céramique (9) sont montées contre les surfaces inférieures des châssis de segment (6),
- **et dans lequel les plaques d'usure (8) comprennent en outre des découpages s'ouvrant dans la couche de revêtement (9), lesdits découpages sont comblés par du polytétrafluoroéthylène (PTFE).**

2. Dispositif de vulcanisation (1) selon la revendication 1, **caractérisé en ce que** l'épaisseur de la couche de revêtement céramique (9) des plaques d'usure (8) est comprise dans l'intervalle 0,001 - 0,5 mm, notamment dans l'intervalle 5 - 40 µm.

3. Dispositif de vulcanisation (1) selon l'une quelconque des revendications précédentes, **caractérisé en ce que** la couche de revêtement céramique (9) des plaques d'usure (8) est de l'oxyde d'aluminium (Al₂O₃), du nitrure de chrome (CrN), du nitrure d'aluminium-chrome (AlCrN) ou des céramiques à base de silicium, telles que le carbure de silicium (SiC) ou le nitrure de silicium (Si₃N₄).

4. Dispositif de vulcanisation (1) selon l'une quelconque des revendications précédentes, **caractérisé en ce qu'**au moins une plaque d'usure (8), notamment deux plaques d'usure (8) pour chaque châssis de segment (6) sont fixées sur la surface intérieure de la bague de fermeture (7).

5. Dispositif de vulcanisation (1) selon l'une quelconque des revendications précédentes, **caractérisé en ce que** la bague de fermeture (7) est mobile dans la direction axiale (Y) de la bague de fermeture (7) pour déplacer les châssis de segment (6) dans la direction radiale (X).

6. Dispositif de vulcanisation (1) selon l'une quelconque des revendications précédentes, **caractérisé en ce que** les châssis de segment (6) comprennent des plaques d'usure (8) qui sont revêtues d'une couche de revêtement céramique (9), lesdites plaques d'usure (8) sont disposées sur les surfaces arrière (15) des châssis de segment (6) de sorte que les couches de revêtement céramique (9) des plaques d'usure des châssis de segment (6) et les couches de revêtement céramique (9) des plaques d'usure (8) de la bague de fermeture (7) sont les unes contre les autres.

7. Dispositif de vulcanisation (1) selon l'une quelconque des revendications précédentes, **caractérisé en ce qu'**au moins une plaque d'usure (8), notamment deux plaques d'usure (8) pour chaque châssis de segment (6), est disposée sur la surface supérieure de la plaque inférieure (13).

8. Dispositif de vulcanisation (1) selon l'une quelconque des revendications précédentes, **caractérisé en ce que** les plaques d'usure (8) revêtues avec une couche de revêtement céramique (9) sont disposées sur les surfaces inférieures des châssis de segment (6) de sorte que les couches de revêtement céramique (9) des plaques d'usure de la plaque inférieure (13) et les couches de revêtement céramique (9) des plaques d'usure (8) sur les surfaces inférieures des châssis de segment (6) sont les unes contre les autres.

9. Dispositif de vulcanisation (1) selon l'une quelconque des revendications précédentes, **caractérisé en ce que** le dispositif de vulcanisation (1) comprend une plaque latérale supérieure (3) et une plaque latérale inférieure (4) qui sont aptes à être montées contre les côtés opposés de l'ébauche du pneumatique à vulcaniser et autour desquelles les châssis de segment (6) sont montés.
